# EUROPÄISCHE PATENTSCHRIFT

(11) **EP 0 741 602 B1**
(45) Veröffentlichungstag und Bekanntmachung des Hinweises auf die Patenterteilung: **22.07.1998**
(21) Anmeldenummer: 95907568.0
(22) Anmeldetag: 19.01.1995
(51) Int. Cl.: B01F 1/00, B01F 5/06

(54) **VORRICHTUNG UND VERFAHREN ZUM AUFLÖSEN VON WASSERLÖSLICHEN, PULVERFÖRMIGEN POLYMERISATEN**
DEVICE AND PROCESS FOR DISSOLVING WATER-SOLUBLE POLYMER POWDERS
PROCEDE ET DISPOSITIF PERMETTANT DE DISSOUDRE DES POLYMERES PULVERULENTS SOLUBLES DANS L'EAU

(30) Priorität: 28.01.1994 DE 4402547
(43) Veröffentlichungstag der Anmeldung: 13.11.1996
(73) Patentinhaber: STOCKHAUSEN GmbH & CO. KG, 47805 Krefeld (DE)
(72) Erfinder: FERLINGS, Friedhelm, D-47800 Krefeld (DE); GÜNTHER, Uwe, D-47918 Tönisvorst (DE); HARTAN, Hans-Georg, D-47625 Kevelaer (DE); FISCHER, Werner, D-47877 Willich (DE)
(74) Vertreter: Klöpsch, Gerald, Dr.-Ing. Patentanwalt
(86) Internationale Anmeldenummer: EP9500192
(87) Internationale Veröffentlichungsnummer: WO9520431

(56) Entgegenhaltungen:
- FR-A- 2 398 769
- GB-A- 2 100 611
- US-A- 2 312 639

## Beschreibung

Die Erfindung betrifft eine Vorrichtung zum Auflösen von wasserlöslichen, pulverförmigen Polymeren mit einem Rohr mit einem Einlaßende zum Einführen der Gelanteile haltigen Polymerlösung und einem Auslaßende zum Ausführen der Polymerlösung mit mehreren Filtern. Des weiteren betrifft die Erfindung ein Verfahren zum Eliminieren von Gelanteilen in einer Polymerlösung, wobei die Polymerlösung durch hintereinander angeordnete Filter mit abnehmender Maschenweite geleitet wird.

Polymere mit hoher mittlerer Molmasse (> 5 Millionen) verfügen in wäßrigen Lösungen über eine starke Affinität zu den Oberflächen suspendierter Kolloide oder Feinstpartikel, wodurch ein Ausflocken dieser Partikel bewirkt wird. Im geflockten Zustand lassen sich diese Partikel wesentlich einfacher von der wäßrigen Lösung abtrennen als im gelösten Zustand. Diese Eigenschaft der Polymere wird dazu verwendet, eine Fest-/Flüssig-Trennung von z.B. Schlämmen, die beispielsweise durch Filtration mittels Siebband-und Kammerfilterpressen oder mittels Zentrifugen durchgeführt wird, zu verbessern. Je nach Oberflächenbeschaffenheit der in der Lösung dispergierten Partikel kommen dabei nicht-ionogene, anionische oder kationische Polymertypen zur Anwendung.

Die Entwässerung von Papiersuspensionen ist ebenfalls ein bedeutendes Anwendungsgebiet, wobei es bei diesen Anwendungen wichtig ist, Polymerlösungen zu verwenden, deren Gelgehalt sehr gering ist, da ansonsten die Reißfestigkeit der Papiere (Papierabriß in der Papiermaschine) verschlechtert wird, weil die Gelpartikel in der Papierstruktur unerwünschte Unregelmäßigkeiten erzeugen. Des weiteren bewirkt ein erhöhter Gelanteil in derartigen wäßrigen Polymerlösungen eine Verschlechterung der Wirksamkeit der Polymerlösung, da die in den Gelpartikeln enthaltenen Polymere nicht wirksam sind. In jedem Fall werden die Anwendungsmöglichkeiten derartiger Polymerlösungen durch Gelpartikel negativ beeinflußt.

Die Polymere kommen als verdünnte wäßrige Lösung zur Anwendung, wobei die Konzentration der Polymere < 3 Gew.-% beträgt. Zum Ansetzen der wäßrigen Lösungen wird die benötigte Menge an Polymeren dem Wasser unter Rühren zugesetzt und in der Lösung dispergiert. Bis zum vollständigen Auflösen der Polymere ist eine Reifezeit von 1 bis 2 Stunden notwendig, während der gemäßigt weitergerührt wird. Jedoch befinden sich auch nach der Reifezeit in den wäßrigen Polymerlösungen noch Gelanteile, die nichtgelöste Polymere enthalten.

Um möglichst gelfreie Polymerlösungen zu erhalten, sind nach dem Stand der Technik verschiedene Schersysteme bekannt, die jedoch neben einer deutlichen Gelreduzierung auch einen unerwünschten Viskositätsabbau einer Polymerlösung bewirken.

In der US-A-4 705 640 wird ein Verfahren beschrieben, gemäß dem Lösungen von unvernetzten Polymeren geschert werden. Dabei wird jedoch ein Viskositätsabbau beobachtet, der einem Abbau der Polymere zugeschrieben wird, wobei dieser Abbau mit einer Zunahme der Ionenaktivität einhergeht. Dieses Scherverfahren kann deshalb nur für sehr hochmolekulare bzw. vernetzte Polymere angewendet werden, da niedrigmolekulare Polymere durch den nach diesem Scherverfahren bedingten Polymerabbau schlechte Anwendungseigenschaften zeitigen.

In der US-A-30 21 269 und der DE-A-27 33 852 werden Verfahren beschrieben, bei denen eine starke Scherung zwar eine Gelreduzierung bewirkt, gleichzeitig aber auch einen mechanischen Abbau der Polymere verursacht.

Aus der EP-A-0 201 237 ist ein Scherverfahren bekannt, bei dem mit Hilfe von Rührsystemen, die wie große Küchenmixer aufgebaut sind, die mit einer Geschwindigkeit von mindestens 2000 U/min rotieren, der Gelgehalt vermindert werden kann. Auch bei diesem Verfahren findet ein mechanischer Abbau der Polymere statt.

In der EP-A-0 238 723 wird ein Verfahren beschrieben, bei dem mittels einer kurzzeitigen Hochschneidscherbehandlung Polymergel gelöst werden kann, ohne dabei einem molekularen Abbau zu unterliegen. Das Verfahren verwendet eine sehr kompliziert aufgebaute, zylindrische Anordnung von zu einem Flügelrad angeordneten, radial ausgerichteten Messern, mit radialen Abgabezwischenräumen zwischen den Messern. Weiterhin sind zusätzliche Aggregate notwendig, wie bei Systemen gemäß US-A-4 705 640 bzw. EP-A-0 201 237.

In der EP-A-0 050 312 wird eine Vorrichtung und ein Verfahren zum Dispergieren und Lösen von Polymerpulver beschrieben. Hierbei ist eine große Abhängigkeit von der Korngröße des Polymerpulvers zu verzeichnen. Bei Korngröße des Polymerpulvers > 800 Mikrometer treten dabei deutliche Effektverluste auf.

In der EP-A-0 051 264 wird ein Verfahren zum Lösen von Granulaten aus Polymergelen in turbulenten Lösungen beschrieben. Hierbei ist dem eigentlichen Auflösevorgang eine Behandlung mit einer Salzlösung vorgeschaltet.

Aus der GB-A-2 067 908 ist eine Vorrichtung und ein Verfahren bekannt, bei dem ein Pulver angefeuchtet wird, um dann eine homogene Lösung zu bilden. Die Bildung kleinerer und kleinster Gelpartikel kann dabei jedoch nicht verhindert werden.

Aus der DE-A-32 14 143 ist eine Vorrichtung und ein Verfahren bekannt, wobei in einer einzigen länglichen Kammer Dispergierstationen für die Polymerlösung angeordnet sind. Die Dispergierstationen enthalten perforierte Teile mit einer geringsten Maschenweite von etwa 380 µm. Diese bekannte Vorrichtung wird verwendet, um eine Polymerlösung bekannter Konzentration mit einem Verdünnungsmittel soweit zu verdünnen, bis eine vorherbestimmte niedrigere Konzentration der Polymerlösung vorliegt.

Bei Verwendung von perforierten Teilen mit größerer Öffnung wird nach DE-A-32 14 143 eine größere Anzahl dieser Teile erforderlich, während bei mehreren perforierten Teilen mit relativ kleiner Öffnungsgröße Druckabfall auftritt und Verstopfungs-bzw. Durchbruchvorgänge zu beobachten sind.

Die erhaltene Lösung ist praktisch einheitlich, jedoch ist es oft erforderlich, das verdünnte Produkt für eine Zeitdauer von 0,5 bis 1,0 Stunden in einem Lagertank aufzubewahren, um die völlige Homogenität des Polymeren in der Lösung einzustellen.

Aufgabe der Erfindung ist es daher, eine Vorrichtung und ein Verfahren zum Auflösen von wasserlöslichen, pulverförmigen Polymerisaten zu schaffen, bei dem aus wäßrigen, Gelanteile aufweisende Polymerlösungen kurzzeitig homogene Polymerlösungen erhalten werden, ohne daß ein Abbau, insbesondere unter Verminderung der Lösungsviskosität, der Retention- oder Entwässerungswirkung der Polymerisate eintritt.

Weiterhin besteht die Aufgabe, eine Vorrichtung mit einfachem Aufbau zu erstellen, die variabel und damit den Produkteigenschaften und erforderlichen Verfahrensbedingungen anpassungsfähig zusammenstellbar und wartungsfrei ist, das heißt insbesondere ohne Verstopfungseffekte unter Ausnutzung einer selbstreinigenden Wirkung arbeitet.

Für die Vorrichtung wird die Aufgabe erfindungsgemäß dadurch gelöst, daß das Rohr aus einer Mehrzahl von miteinander verbindbaren, Filter aufweisenden Rohrabschnitten gebildet ist, wobei wenigstens ein Filter eine Maschenweite von wenigstens 25µm und von maximal 100µm aufweist und daß die Filter der Rohrabschnitte zum Auslaßende des Rohres hin kleinere Maschenweite aufweisen. Für das Verfahren wird die Lösung der Aufgabe erfindungsgemäß dadurch erreicht, daß eine wässrige, Gelanteile aufweisende Polymerlösung durch die Vorrichtung der Erfindung geleitet wird.

Hierbei wurde insbesondere überraschenderweise festgestellt, daß bei Verwendung von Filtern mit sehr geringer Maschenweite die beim Auflösen von pulverförmigen Polymerisaten zwangsläufig gebildeten Gelanteile keine Verstopfung in der erfindungsgemäßen Vorrichtung hervorrufen und, daß nach dem erfindungsgemäßen Verfahren sogar wartungsfrei gearbeitet werden kann und die Effektivität der Polymerisate nicht beeinträchtigt ist.

Bevorzugte Ausgestaltungen der Erfindung sind Gegenstand der Unteransprüche.

Bei der erfindungsgemäßen Vorrichtung wird erreicht, daß der Gelanteil der Polymerlösung beim Durchgang durch die Filter der Mehrzahl von Rohrabschnitten sukzessiv auf für die Polymere schonende Weise auf ein gewünschtes Niveau reduziert wird. Aufgrund der schonenden sukzessiven Reduzierung der Gelanteile wird ein Abbau der Polymere und ein dadurch bedingter Viskositätsverlust weitgehend vermieden. Die erfindungsgemäße Vorrichtung weist den Vorteil auf, daß die jeweilige Zahl und die Anordnung der Rohrabschnitte, und damit die Zahl und Anordnung der verwendeten Filter und deren Maschenweite, jeweils vor Ort individuell auf die gegebenen Verhältnisse abgestellt, bestimmt und installiert werden können.

Vorzugsweise ist ein Filter eines Rohrabschnitts an einer Seite des Rohrabschnitts angeordnet. Dadurch wird erreicht, daß diese Filter besonders leicht ausgewechselt werden können.

Gemäß einer weiteren bevorzugten Ausführungsform der erfindungsgemäßen Vorrichtung weisen die Rohrabschnitte jeweils an mindestens einem Ende ein Schraubgewinde auf, mit dem sie miteinander verbindbar sind. Dadurch wird erreicht, daß die einzelnen Rohrabschnitte schnell auf abgedichtete Weise miteinander verbunden werden können. Dies hat den Vorteil zur Folge, daß die Zahl der Rohrabschnitte, und damit die Zahl der verwendeten Filter schnell und effektiv verändert werden kann.

Gemäß einer weiteren bevorzugten Ausführungsform der erfindungsgemäßen Vorrichtung weisen die Rohrabschnitte jeweils an einem Ende Kupplungs-Elemente, wie Bajonett-Verschlüsse oder andere Schnellverschlüsse oder eine Schraubmanschette auf, die in ein Schraubgewinde an dem anderen Ende eines anderen Rohrabschnitts eingreift. Dadurch wird erreicht, daß zwei Rohrabschnitte aneinandergefügt werden können, ohne den einen Rohrabschnitt in bezug auf den anderen Rohrabschnitt verdrehen zu müssen.

Gemäß der erfindungsgemäßen Vorrichtung sind die Rohrabschnitte mit Filtern unterschiedlicher Maschenweite versehen. Die Maschenweite der Filter nimmt vom Einlaßende des Rohrs zum Auslaßende des Rohrs hin ab. Dadurch wird erreicht, daß der Gelanteil einer Polymerlösung jeweils beim Durchgang durch einen Filter um einen bestimmten Betrag reduziert wird, und insofern ein gleichmäßiger, kontinuierlicher Abbau des Gelanteils beim Durchgang der Lösung durch die erfindungsgemäße Vorrichtung zu verzeichnen ist.

Besonders vorteilhaft ist der bei der erfindungsgemäßen Verwendung der Vorrichtung überraschend zu beobachtende Selbst-reinigungseffekt, der dazu führt, daß selbst bei partieller geringer Belegung der Filter durch Gelanteile des gequollenen unvollständig gelösten Polymerisats diese Anteile gelöst werden, bevor eine Verstopfung eintritt.

Gemäß einer weiteren bevorzugten Ausführungsform der erfindungsgemäßen Vorrichtung weist der Filter des ersten Rohrabschnitts eine Maschenweite von 1000 µm oder kleiner auf.

Gemäß einer weiteren bevorzugten Ausführungsform der erfindungsgemäßen Vorrichtung sind bis zu zehn Rohrabschnitte oder mehr vorgesehen. Eine entsprechend hohe Zahl von Rohrabschnitten hat dabei die vorteilhafte Wirkung, daß die Reduzierung des Gelanteils sehr schonend vorgenommen wird, und somit ein Abbau der Polymere und ein damit verbundener Viskositätsverlust der Polymerlösung weitestgehend vermieden wird.

Gemäß einer weiteren bevorzugten Ausführungsform der erfindungsgemäßen Vorrichtung sind sieben Rohrabschnitte vorgesehen. Bei Verwendung von sieben Rohrabschnitten wird eine wirkungsvolle und schonende Reduzierung des Gelanteils mit geringem Aufwand und geringem Druckverlust der Polymerlösung beim Durchgang durch die erfindungsgemäße Vorrichtung erzielt.

Gemäß einer weiteren bevorzugten Ausführungsform der erfindungsgemäßen Vorrichtung weist der Filter des ersten Kammerabschnitts eine Maschenweite von 1000 µm oder kleiner und der Filter des letzten Rohrabschnitts eine Maschenweite von maximal 100 µm auf.

Gemaß einer weiteren bevorzugten Ausführungsform der erfindungsgemäßen Vorrichtung weist der Filter des ersten Rohrabschnitts eine Maschenweite von 1000 µm oder kleiner und der Filter des letzten Rohrabschritts eine Maschenweite von 25 µm auf. Dadurch wird erreicht, daß die Gelpartikel nach Durchgang durch die erfindungsgemäße Vorrichtung derart klein sind, daß sie sich nach relativ kurzer Zeit in der Polymerlösung weiter auflösen.

Bei dem erfindungsgemäßen Verfahren nimmt die Maschenweite der hintereinander angeordneten Filter vorzugsweise von 1000 µm auf maximal 100 µm ab. Soll eine besonders feine Verteilung des Polymers in der Lösung erreicht werden, so nimmt die Maschenweite der hintereinander angeordneten Filter vorzugsweise von 1000 µm auf 25 µm ab. Sie kann aber z.B. auch von 800 oder 700 Mikrometern an auf 25 Mikrometer abnehmen. Dadurch wird eine ausreichende Reduzierung der Größe der Gelpartikel erreicht, bzw. wird es erreicht, daß die Gelpartikel auf eine so geringe Größe reduziert werden, daß sie sich anschließend von alleine in der Lösung weiter auflösen.

Gemäß einer weiteren bevorzugten Ausführungsform des erfindungsgemäßen Verfahrens beträgt der Gewichtsanteil der Polymere < 3% der Polymerlösung. Dadurch wird sichergestellt, daß die Viskosität der Polymerlösung einen genügend niedrigen Wert aufweist, bei dem die Polymerlösung ohne zu große Reibungsverluste durch die Filter der erfindungsgemäßen Schervorrichtung gedrückt werden kann.

Gemäß einer weiteren bevorzugten Ausführungsform des erfindungsgemäßen Verfahrens wird die Polymerlösung mit einem Druck von maximal 20 x 10⁵ Pa (20 bar) durch die Filter gedrückt. Ein Betreiben der erfindungsgemäßen Schervorrichtung bei derartigen Drucken hat sich als vorteilhaft erweisen, und der Durchmesser der erfindungsgemäßen Schervorrichtung kann bei derartigen Drücken leicht so an die vorgesehene Durchflußmenge der Polymerlösung angepaßt werden, daß die Durchmesser der Schervorrichtung nicht unnötig groß ausfallen müssen.

Bei höheren Drücken als 20 bar besteht die Gefahr, daß der Anteil der Polymere, der beim Durchgang durch die Filter einem Polymerabbau unterliegt, so hoch wird, daß die Polymerlösung aufgrund der erhöhten Zahl niedrigmolekularer Polymere eine Viskositätsabnahme erfährt.

Gemäß einer weiteren bevorzugten Ausfuhrungsform des erfindungsgemäßen Verfahrens wird die Polymerlösung mit einem Druck zwischen 3 x 10⁵ und 8 x 10⁵ Pa (3 und 8 bar) durch die Filter gedrückt. Dieser Wert hat sich als ein Optimum bezüglich Durchmesser der Schervorrichtung, Durchflußmenge der Polymerlösung und Viskositätsstabilität erwiesen.

Nachfolgend wird die Erfindung anhand einer vorteilhaften Ausführungsform erläutert, die in den Figuren der Zeichnung dargestellt ist.

Es zeigen
- Fig. 1: eine Teilansicht der erfindungsgemäßen Schervorrichtung im Querschnitt,
- Fig. 2: eine Ausführungsform der erfindungsgemäßen Vorrichtung in Draufsicht.

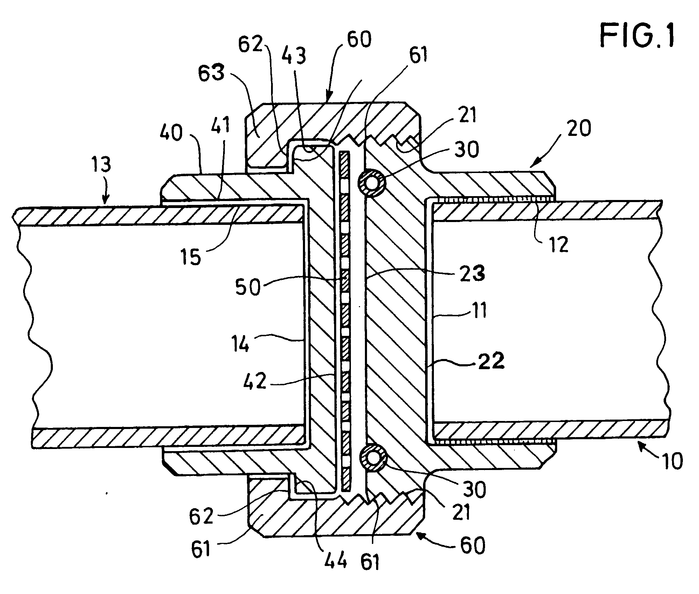

Bei dem in Fig. 1 dargestellten Teilausschnitt einer erfindungsgemäßen Schervorrichtung ist ein Ende 11 eines Rohrabschnitts 10 mit einem ringförmigen Endstück 20 versehen, das entlang seiner Innenfläche 22 im wasserdichten Preßsitz auf der Außenfläche 12 des Rohrabschnitts 10 aufliegt. In der Endfläche 23 des Endstücks 20 ist eine ringförmige Gummiabdichtung 30 angeordnet. Entlang der Außenfläche 21 ist das Endstück 20 mit einem Gewinde versehen. Der Rohrabschnitt 13 ist an seinem anderen Ende 14 mit einem Gegenendstück 40 versehen, wobei die Innenfläche 41 des Gegenstücks 40 im wasserdichten Preßsitz auf der Außenfläche 15 des Rohrabschnitts 13 aufliegt. Das Gegenstück 40 ist im Bereich seiner Endfläche 42 mit einem Flansch 43 versehen. Über der Endfläche 42 des Gegenstücks 40 ist ein Filter 50 mit vorgegebener Maschenweite angeordnet. Über dem Flansch 43 des Gegenstücks 40 ist eine Schraubmanschette 60 angeordnet. Die Schraubmanschette 60 ist in ihrem vorderen Bereich mit einem Gewinde 61 versehen. Der hintere Bereich 61 der Schraubmanschette 60 ist derart nach innen gebogen, daß er mit seiner Innenfläche 62 an die Fläche 44 des Gegenstücks 40 angrenzt.

Zum Zusammenschrauben der Rohrabschnitte 10 und 13 werden ihre Enden 11 und 14 in sich gegenüberstehender Weise in Stellung gebracht, und die Schraubmanschette 60 wird mit ihrem Gewinde 61 auf das Gewinde 21 des Endstücks 20 geschraubt. Dabei wird das Gegenendstück 40 mit dem darauf angebrachten Filter 50 durch Druck des hinteren Teils 63 der Schraubmanschette 60 gegen den Flansch 43 des Gegenstücks 40 durch fortlaufendes Schrauben der Schraubmanschette 60 so weit in Richtung auf das Endstück 20 des Rohrabschnitts 10 zubewegt, bis der Filter 50 im wasserdichten Preßsitz mit der Ringdichtung 30 zu liegen kommt. Auf diese Weise ist der Rohrabschnitt 13 wasserdicht mit dem Rohrabschnitt 10 verbunden, und zwischen ihnen wasserdicht das Filter 50 angeordnet.

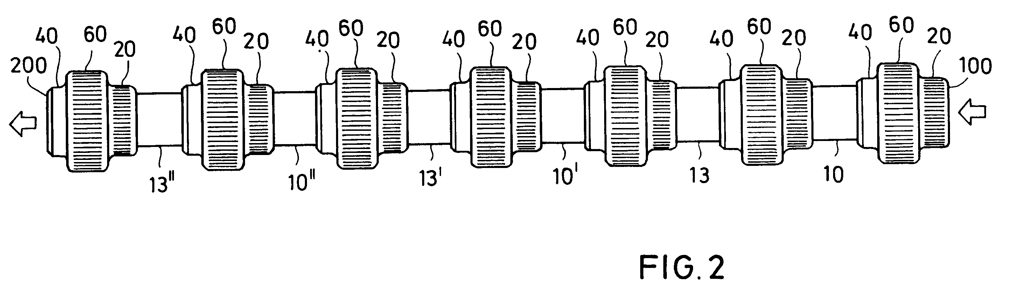

Die in Fig. 2 dargestellte erfindungsgemäße Schervorrichtung weist ein Einlaßende 100 und ein Auslaßende 200 auf. Zum Zweck der Verbindung mit einer Zuleitung ist das Einlaßende 100 mit einem Endstück 20 für die nicht dargestellte Zuleitung versehen. Der Rohrabschnitt 10 ist mit seinem anderen Ende mit einem Gegenstück 40 versehen, über dem eine Schraubmanschette 60 angeordnet ist. Das eine Ende 11 des Rohrabschnitts 10 ist mit einem weiteren Endstück 20 versehen, das über eine Schraubmanschette 60 mit dem das Ende 14 des Rohrabschnitts 13 abschließenden Gegenstück 40 verbunden ist. Die in der Draufsicht dargestellten Endstücke 20, Gegenstück 40 und Schraubmanschette 60 sind dabei aufgebaut wie die entsprechenden, in Fig. 1 im Querschnitt dargestellten Bauteile mit gleicher Referenzzahl. Die Rohrabschnitte 10, 13, 10', 13', 10'' und 13'' sind dabei jeweils mit identischen Teilen versehen und auf die gleiche, in Fig. 1 dargestellte Weise zusammengefügt. Das andere Ende des Rohrabschnitts 13'' ist ebenfalls mit einem Endstück 20 versehen, das über eine Schraubmanschette 60 mit einem Gegenstück 40 verbunden ist, das mit einem nicht dargestellten Ausleitungsendstück verbunden wird.

Zum Betrieb der erfindungsgemäßen Schervorrichtung kann die Anzahl der Rohrabschnitte je nach den vorherrschenden Gegebenheiten erhöht oder vermindert werden, und es können insbesondere je nach der Notwendigkeit der Gegebenheiten verschiedene Filter 50 mit unterschiedlichen Maschenweiten verwendet werden. In dem gezeigten Ausführungsbeispiel beträgt die Maschenweite des ersten, nahe dem Einlaßende 100 gelegenen Filters 1000 µm, und die Maschenweite des letzten, nahe dem Auslaß 200 angeordneten Filters ist < 100 µm. Die Maschenweite der dazwischenliegenden Filter ist jeweils so dimensioniert, daß sie in Strömungsrichtung der Polymerlösung kontinuierlich abnimmt, das heißt, die Maschendichte des in Strömungsrichtung liegenden zweiten Filters ist kleiner als die Maschenweite des ersten Filters, wohingegen die Maschenweite des in Strömungsrichtung liegenden dritten Filters kleiner als die Maschenweite des in Strömungsrichtung liegenden zweiten Filters ist, usw. Die dargestellte Schervorrichtung hat eine Länge von ungefähr 100 cm, wobei die Länge der einzelnen Rohrabschnitte 10, 13, 10', 13', 10'', 13'' jeweils 10 cm beträgt. Die erfindungsgemäße Rohrscherstation kann jedoch auch insgesamt eine Länge von 10 cm aufweisen, wobei die einzelnen Rohrabschnitte auch sehr kurz dimensioniert sein können, und sie kann auch Längen von 200 cm und mehr aufweisen.

Die im Ausführungsbeispiel gezeigte Schervorrichtung wird für die Behandlung wäßriger Polymerlösungen verwendet, die für die Papierherstellung eingesetzt werden. Für diese Verwendung geeignete Polymere besitzen je nach Anwendungsgebiet einen nichtionogenen, anionischen oder kationischen Ladungscharakter. Die entsprechenden Monomere sind in erster Linie solche, die Vinylgruppen enthalten, insbesondere Acrylsäure bzw. Methacrylsäurederivate.

Die nichtionischen Polymere basieren in der Regel auf folgenden Monomeren: Acrylamid, Methacrylamid, N-Vinylmethylacetamid, Vinylpyrrolidon, Acrylnitril, Methylmethacrylat und andere Acrylsäure- oder Methacrylsäureester. Geeignete anionische Monomere sind Salze der (Meth-)Acrylsäure, Itaconsäure, Maleinsäure, Fumarsäure, Vinylsulfonsäure, 2-Acrylamido-2-methylpropansulfonsäure und anderer polymerisierbarer Carbonsäuren oder Sulfonsäuren. Geeignete kationische Monomere sind Dialkylaminoalkyl-(meth-)acrylamide, Dialkylaminoalkyl-(meth-) acrylsäureester und quaternierte bzw. sauer gestellte Derivate davon.

### Testmethoden (I)

### Viskosität

Die Viskositätsmessung erfolgt mit einem Brookfield-Viskosimeter (Typ: RVT / Spindel II / 5 U/min).

### Gel 1

800 ml der entsprechenden Polymerlösung werden über ein 315-µm-Normsieb gegeben und mit 3 l Wasser gewaschen. Der Rückstand wird volumetrisch erfaßt. Die Angabe erfolgt in ml.

### Gel 2

800 ml der entsprechenden Polymerlösung werden über ein 125-µm-Normsieb gegeben und mit 3 l Wasser gewaschen. Der Rückstand wird gravimetrisch erfaßt und mit dem Faktor 250 multipliziert. Die Angabe erfolgt in g/kg.

### Entwässerung

Die Entwässerung wird mit einem geeigneten Klärschlamm gemessen. Dazu wird eine bestimmte Menge der Polyelektrolyt-Lösung dem Schlamm unter konstanten Bedingungen zugemischt (10 s bei 1000 U/min). Nach dieser Konditionierung wird die Schlammprobe mit einem Handsieb filtriert (=entwässert). Das Metallsiebgewebe besitzt eine Maschenweite von 100 µm nach DIN 4188. Gemessen wird die Entwässerungszeit für 200 ml der ab Start durchlaufenden Filtratmenge.

### Testmethoden (II)

Die Papierstoffentwässerung erfolgt unter konstanten Bedingungen mit dem Schopper-Riegler-Gerät unter Verwendung von 3 g Faserstoff auf 1000 ml wobei die Zugabemengen an Polymeres 0,01, 0,02 und 0,03%, bezogen auf den Faserstoff betragen. Gemessen wird die Auslaufzeit von 700 ml Filtrat. Die Angabe erfolgt in s.

Die Messung der Retention erfolgt nach der BRITT-JAR-Methode unter Verwendung von 2,5 g Feststoff (65% Zellstoff und 35% Kaolin) auf 500 ml inklusive des Retentionsmittels. Nach 15 s Rührzeit im BRITT-JAR (600 bzw. 750 U/min) soll bei 30 s Auslaufzeit eine Filtratmenge zwischen 100 und 150 ml genommen werden. Darin wird mittels konditionierter Schwarzbandfilter gravimetrisch der Feststoffanteil bestimmt. Die Angabe erfolgt in %.

### Beispiele

In den Beispielen wird gezeigt, daß durch die Scherung in der Rohrscherstation ein deutlicher Abbau des Gelgehaltes stattfindet, die Polymerlösungen durch die Scherung keinen Viskositätsabbau erleiden und daß im Dauertest kein Verstopfen der Siebe in der Rohrscherstation auftritt.

Im Vergleichsbeispiel 1 wird gezeigt, daß eine Scherung durch schnellrotierende Rührer (wie in der US-A-4705640 und EP-A-0201237 beschrieben) zwar einen guten Gelabbau bewirkt, aber dabei die Viskosität deutlich reduziert wird.

Im Vergleichsbeispiel 2 wird gezeigt, daß eine Scherung durch ein Sieb mit einem Lochdurchmesser von 1000 µm (wie sie in der DE-A-27 33 852 beschrieben werden), bei einer gleichen Durchflußleistung, die bei der Rohrscherstation angelegt wurde, nicht der gleiche gute Gelabbau erzeugt wird, wie er durch eine Scherung in der erfindungsgemäßen Rohrscherstation erhalten wird.

Im Vergleichsbeispiel 9 wurden 2 1000-µm-Siebe und ein 315-µm-Sieb eingebaut. Auch hierbei wurde festgestellt, daß der Gelabbau nicht ausreichend war.

In weiteren Beispielen wird gezeigt, daß ohne die definierte Siebanordnung, bei der ein Sieb ≥ 1000 µm und mehrere Siebe < 1000 µm bzw. < 100 µm sein sollen, zwar ein Gelabbau stattfindet, aber wegen einer Belegung der Siebe der Rohrscherstation kein wartungsfreier Dauerbetrieb möglich ist.

### Beispiel 1

Es wurde von einem ca. 45%igen kationaktiven Polyelektrolyten (Granulat) eine 0,5%ige wäßrige Lösung hergestellt.

Nach einer Anquellzeit von 15 bis 30 Minuten erfolgte die Behandlung mit der Rohrscherstation (RSS). Dazu wurde mittels einer Exzenterschneckenpumpe die Lösung über die Rohrscherstation gepumpt.
- Siebbestückung der RSS:: 1 x 1.000 µm
2 x 315 µm
2 x 125 µm
1 x 25 µm
- Siebabstände:: 8 cm
- Rohrdurchmesser:: 1,4 cm (Innendurchmesser)
- Totvolumen der RSS:: 70 ml
- Gesamtvolumen der behandelten 0,5%igen Lösung:: 53,2 l
- max. Pumpleistung:: 66,9 l/h
- Arbeitsdruck:: 4,0 - 5,5 bar

**Tabelle 1**

| **Probe** | **Gel** | **Viskosität [mPa.s]** | **Probenahme erfolgte nach [I] Durchsatz** |
|---|---|---|---|
| unbehandelt | 24 | 520 | 7 |
| behandelt | < 5 | 640 | 14 |
| | < 5 | 630 | 35 |
| | < 5 | 530 | 42 |
| | < 5 | 600 | 49 |

### Beispiel 2

Lösungsaufbereitung wie unter Beispiel I.
- Siebbestückung der RSS:: 1 x 1.000 µm
2 x 500 µm
2 x 250 µm
1 x 125 µm
1 x 50 µm
- Siebabstände:: 15 cm
- Rohrdurchmesser:: 5 cm (Innendurchmesser)
- Totvolumen der RSS: 2,4 l
- Gesamtvolumen der behandelten 0,5%igen Lösung:: 120 l
- max. Pumpleistung:: 400 l/h
- Arbeitsdruck:: 6 - 7 bar

**Tabelle 2**

| **Probe** | **Gel** | **Viskosität [mPa.s]** | **Probenahme erfolgte nach [I] Durchsatz** |
|---|---|---|---|
| unbehandelt | 40 | 880 | 40 |
| behandelt | < 5 | 1000 | 30 |
| | < 5 | 930 | 60 |
| | < 5 | 1080 | 90 |

### Vergleichsbeispiel 1

Von zwei (A und B) ca. 45%igen kationaktiven Polyelektrolyten (Pulver) wurde je eine 0,5%ige wäßrige Lösung hergestellt.

Nach einer Anquellzeit von 5 Minuten erfolgte eine 10minütige Behandlung mit einem schnellrotierenden Rührer (20.000 U/min).

**Tabelle: 3**

| **Probe** | **Gel** | **Viskosität [mPa.s]** |
|---|---|---|
| A / unbehandelt | 34 | 630 |
| A / behandelt | 0 | 130 |
| B / unbehandelt | 11 | 530 |
| B / behandelt | 0 | 135 |

### Vergleichsbeispiel 2 - 8

Variation der Siebbestückung der RSS und Lösungsaufbereitung wie unter Beispiel I.
- max. Pumpleistung:: 33,4 l/h
- Rohrdurchmesser:: 1,4 cm (Innendurchmesser)

**Tabelle: 4**

| **Vergleichsbeispiel** | **Siebbestückung** | **Arbeitsdruck [bar]** | **Gel**^{**1)**} **[ml]** | **Viskositat**^{**1)**} **[mPa.s]** | **Zustand der RSS nach** ^{**2)**} |
|---|---|---|---|---|---|
| | unbehandelte Probe | ./. | 26 | 570 | |
| 2 | 1 x 1.000 µm | ./. | 28 | 540 | unverklebt |
| 3 | 1 x 315 µm | 0,5 | 20 | 600 | unverklebt |
| 4 | 1 x 125 µm | 1,5 | 5 | 770 | leichte Belegung |
| 5 | 1 x 25 µm | 4,0 | < 5 | 700 | starke Belegung |
| 6 | 2 x 315 µm | 0,8 | 17 | 600 | unverklebt |
| 7 | 2 x 25 µm | 7,0 | < 5 | 440 | starke Belegung |
| 8 | 125 µm/25 µm | 3,0 | < 5 | 540 | leichte Belegung |
| Beurteilung nach 2 l Durchsatz Beurteilung nach 3 l Durchsatz | | | | | |

### Vergleichsbeispiel 9

Lösungsaufbereitung wie unter Beispiel I
- Siebbestückung der RSS:: 2 x 1.000 µm
1 x 315 µm
- Siebabstände:: 8 cm
- Totvolumen der RSS:: 30 ml
- Rohrdurchmesser:: 1,4 cm (Innendurchmesser)
- Gesamtvolumen der behandelten % Lösung:: 2,4 l
- max. Pumpleistung:: 33,4 l/h
- Arbeitsdruck:: 0,7 bar

**Tabelle 5**

| **Probe** | **Gel** | **Viskosität [mPa.s]** | **Probenahme erfolgte nach [I] Durchsatz** |
|---|---|---|---|
| unbehandelt | 40 | 460 | 0,8 |
| behandelt | 12 | 530 | 1,6 |
| | 13 | 570 | 2,4 |

In Beispiel 3 wird für ein kationisches Polymeres gezeigt, daß die Anquellzeiten (Reifezeiten) mittels der Rohrscherstation deutlich reduziert werden können, wobei niedrigere Gel-2-Werte erzielt werden, als sie bei nicht mit der Rohrscherstation behandelten Polymerlösungen mit hohen Reifezeiten erhalten werden. Die Vergleichsbeispiele der nicht behandelten Polymerlösungen bei 10 - 60 Minuten Anquellzeit zeigen, daß der Gelgehalt durch die Behandlung der Lösungen mit der Rohrscherstation deutlich sinkt, ohne daß ein Viskositätsverlust auftritt.

Beispiel 4 zeigt den gleichen Sachverhalt wie Beispiel 1, nur daß hier die Untersuchung eines anionischen Polymeren beschrieben wird.

Beispiel 5 zeigt, daß durch die Behandlung einer hochvergelten Polymerlösung mit der Rohrscherstation eine deutlich gelärmere Polymerlösung erzeugt wird, die deutlich bessere Schlamment-wässerungswerte besitzt als die unbehandelte Polymerlösung.

Beispiel 6 verdeutlicht, daß durch die Behandlung der Polymerlösungen mit der Rohrscherstation der Gelgehalt stark reduziert wird, ohne daß dabei eine Verschlechterung der anwendungstechnischen Eigenschaften im Vergleich zu der unbehandelten Polymerlösung festgestellt wird.

In Beispiel 7 wird gezeigt, daß der Gelgehalt eines Polymeren, das aufgrund seines niedrigen Gelgehaltes für den Einsatz bei der Papierherstellung bereits geeignet ist, durch die Behandlung mit der Rohrscherstation noch weiter reduziert werden kann, ohne daß dabei die anwendungstechnischen Werte für die Papierentwässerung und Retention abnehmen.

### Beispiel 3

Es wurde von einem ca. 45%igen kationaktiven Polyelektrolyten (Granulat) eine 0,5%ige wäßrige Lösung hergestellt.

Nach einer bestimmten Anquellzeit (Reifezeit) erfolgte die Behandlung mit einer Rohrscherstation (RSS). Dazu wurde mittels einer Exzenterschneckenpumpe die Lösung über die RSS gepumpt.
- Siebbestückung der RSS:: 1 x 1000 µm
2 x 315 µm
2 x 125 µm
1 x 25 µm
- Siebabstände:: 8 cm
- Rohrinnendurchmesser:: 1,4 cm
- Totvolumen RSS:: 70 ml
- max. Pumpleistung:: 34 l/h

| Probenr. | Anquellzeit (min) | Gel 1 (ml) | Gel 2 (g/kg) | Viskosität II/5 (mPa.s) | Probenahme erfolgte nach (I) Durchsatz |
|---|---|---|---|---|---|
| 1/unbehandelt | 10 | > 100 | > 5000 | 2400 | ./. |
| 2/behandelt | 10 | < 5 | 200 | 2040 | 2,4 |
| 3/behandelt | 15 | < 5 | 72,5 | 2200 | 2,4 |
| 4/unbehandelt | 20 | 75 | > 5000 | 2700 | ./. |
| 5/unbehandelt | 30 | 20 | > 5000 | 2340 | ./. |
| 6/behandelt | 30 | < 5 | 50 | 2120 | 2,4 |
| 7/unbehandelt | 40 | 9 | > 5000 | 2240 | ./. |
| 8/unbehandelt | 50 | 5 | > 5000 | 2340 | ./. |
| 9/unbehandelt | 60 | < 5 | 825 | 2160 | ./. |
| 10/unbehandelt | 90 | < 5 | 775 | 2040 | ./. |
| 11/unbehandelt | 180 | < 5 | 400 | 2000 | ./. |
| 12/unbehandelt | 360 | < 5 | 193 | 1750 | ./. |

### Beispiel 4

Es wurde von einem ca. 40%igen anionaktiven Polyelektrolyten (Granulat) eine 0,5%ige Lösung hergestellt, wobei die Anquellzeiten variiert wurden.
- Siebbestückung der RSS:: Die Behandlung der Lösung mit der Rohrscherstation erfolgte wie in Beispiel 3

| Probenr. | Anquellzeit (min) | Gel 1 (ml) | Gel 2 (g/kg) | Visosität II/5 (mPa.s) | Probenahme erfolgte nach (I) Durchsatz |
|---|---|---|---|---|---|
| 13/unbehandelt | 10 | 35 | > 5000 | 1700 | ./. |
| 14/behandelt | 10 | < 5 | < 25 | 2020 | 2,4 |
| 15/unbehandelt | 20 | 25 | > 5000 | 2140 | ./. |
| 16/behandelt | 20 | < 5 | < 25 | 2200 | 2,4 |
| 17/unbehandelt | 30 | 13 | > 5000 | 2180 | ./. |
| 18/behandelt | 30 | < 5 | < 25 | 1960 | 2,4 |
| 19/unbehandelt | 40 | 12 | > 5000 | 2260 | ./. |
| 20/unbehandelt | 50 | 10 | > 5000 | 2300 | ./. |
| 21/unbehandelt | 60 | 9 | > 5000 | 2260 | ./. |

### Beispiel 5

Es wurde von einem ca. 75%igen kationaktiven Polyelektrolyten (Granulat) eine 0,1%ige wäßrige Lösung hergestellt.

Nach einer Anquellzeit von 15 min erfolgte die Behandlung mit der Rohrscherstation (RSS). Dazu wurde mittels einer peristaltischen Pumpe die Lösung über die RSS gepumpt.
- Siebbestückung der RSS:: 1 x 2000 µm
1 x 1000 µm
2 x 315 µm
2 x 100 µm
1 x 25 µm
- Siebabstände:: 8 cm
- Rohrinnendurchmesser:: 1,4 cm
- Totvolumen RSS:: 70 ml
- max. Pumpleistung:: 3,2 l/h

| Probenr. | Gel 1 | Schlammentwässerung mit 170 ppm (s) | Probenahme erfolgte nach (I) Durchsatz |
|---|---|---|---|
| 22/unbehandelt | > 100 | 180 | ./. |
| 23/behandelt | < 5 | 48 | 2,4 |

### Beispiel 6

Es wurde von einem ca. 45%igen kationaktiven Polyelektrolyt (Granulat) eine 0,5%ige wäßrige Lösung hergestellt.

Nach einer bestimmten Anquellzeit (15 min) erfolgte die Behandlung mit der Rohrscherstation (RSS). Dazu wurde mittels einer peristaltischen Pumpe die Lösung über die RSS gepumpt. (Ablauf und Aufbau wie Beispiel 5.)

| Probenr. | Gel 2 (g/kg) | Visosität II/5 (mPa.s) | Papierstoffentwässerung | | | Retention | | Probenahme erfolgte nach (I) Durchsatz |
|---|---|---|---|---|---|---|---|---|
| | | | 0,01% | 0,02% | 0,03% | 0,04% | 0,08% | |
| 24/unbeh. | 5720 | 1890 | 57,7 | 39,7 | 30,6 | 68,8 | 88,2 | ./. |
| 25/beh. | 260 | 1800 | 58,6 | 40,5 | 30,8 | 69,6 | 89 | 0,8 |
| 26/beh. | 240 | 1840 | 58,1 | 39,5 | 30,5 | 69,2 | 88,2 | 5,6 |

### Beispiel 7

Es wurde von einem ca. 25%igen kationaktiven Polyelektrolyten (Granulat) eine 0,5%ige wäßrige Lösung hergestellt.

Nach einer Anquellzeit von 15 min erfolgte die Behandlung mit einer Rohrscherstation (RSS). (Ablauf und Aufbau wie Beispiel 5.) Dazu wurde mittels einer peristaltischen Pumpe die Lösung über die RSS gepumpt.

| Probenr. | Gel 2 (g/kg) | Papierstoffentwässerung | | | Retention | | Probenahme erfolgte nach (I) Durchsatz |
|---|---|---|---|---|---|---|---|
| | | 0,01% | 0,02% | 0,03% | 0,04% | 0,08% | |
| 27/unbeh. | 62,5 | 57,7 | 37,8 | 32,4 | 37,8 | 53,9 | ./. |
| 28/beh. | 50 | 55, | 37,2 | 30,8 | 43 | 55,2 | 2,4 |

## Patentansprüche

1. Vorrichtung zum Auflösen von wasserlöslichen, pulverförmigen Polymerisaten, die aus einem Rohr mit einem Einlaßende (100) zum Einführen von Gelanteile aufweisenden Polymerlösungen und einem Auslaßende (200) zum Ausführen der Polymerlösungen sowie aus einer Mehrzahl von miteinander verbindbaren, Filter aufweisenden Rohrabschnitten (10, 13, 10', 13', 10'' und 13'') gebildet ist, dadurch gekennzeichnet, daß wenigstens ein Filter (50) eine Maschenweite von wenigstens 25µm und von maximal 100µm aufweist und daß die Filter (50) der Rohrabschnitte (10, 13, 10', 13', 10'' und 13'') zum Auslaßende (200) des Rohres hin kleinere Maschenweiten aufweisen.

2. Vorrichtung nach Anspruch 1, dadurch gekennzeichnet, daß ein Filter (50) eines Rohrabschnitts (10, 13, 10', 13', 10'' und 13'') an einer Seite des Rohrabschnitts angeordnet ist.

3. Vorrichtung nach einem der Ansprüche 1 oder 2, dadurch gekennzeichnet, daß die Rohrabschnitte (10, 13, 10', 13', 10'' und 13'') jeweils an mindestens einem Ende zusammenfügbare Elemente (20), insbesondere schnell verschließbare Elemente oder Schraubgewinde aufweist, mit denen sie miteinander verbindbar sind.

4. Vorrichtung nach einem der Ansprüche 1 bis 3, dadurch gekennzeichnet, daß die Rohrabschnitte (10, 13, 10', 13', 10'' und 13'') an jeweils einem Ende eine Schraubmanschette (60) aufweisen, die in ein Schraubgewinde am anderen Ende eines anderen Rohrabschnitts eingreift.

5. Vorrichtung nach einem der Ansprüche 1 bis 4, dadurch gekennzeichnet, daß die Rohrabschnitte (10, 13, 10', 13', 10'' und 13'') mit Filtern (50) unterschiedlicher Maschenweite versehen sind.

6. Vorrichtung nach einem der Ansprüche 1 bis 5, dadurch gekennzeichnet, daß der Filter (50) des ersten Rohrabschnitts (10) eine Maschenweite von 1.000µm oder kleiner aufweist.

7. Vorrichtung nach einem der Ansprüche 1 bis 6, dadurch gekennzeichnet, daß der Filter (50) des ersten Rohrabschnitts (10) eine Maschenweite von 1.000µm oder kleiner und der Filter (50) des letzten Rohrabschnitts (13'') eine Maschenweite von maximal 100µm aufweist.

8. Vorrichtung nach einem der Ansprüche 1 bis 7, dadurch gekennzeichnet, daß der Filter (50) des ersten Rohrabschnitts (10) eine Maschenweite von 1.000µm oder kleiner und der Filter (50) des letzten Rohrabschnitts (13'') eine Maschenweite von maximal 50µm, vorzugsweise 25µm aufweist.

9. Vorrichtung nach einem der Ansprüche 1 bis 8, dadurch gekennzeichnet, daß bis zu zehn Rohrabschnitte vorgesehen sind.

10. Vorrichtung nach einem der Ansprüche 1 bis 9, dadurch gekennzeichnet, daß sieben Rohrabschnitte vorgesehen sind.

11. Verfahren zum Auflösen von wasserlöslichen, pulverförmigen Polymerisaten in einer Vorrichtung nach einem der Ansprüche 1 bis 10, dadurch gekennzeichnet, daß eine wässrige, Gelanteile aufweisende Polymerlösung durch hintereinander angeordnete Filter (50) mit abnehmender Maschenweite, von denen wenigstens ein Filter eine Maschenweite von wenigstens 25µm und von maximal 100µm aufweist, geleitet wird.

12. Verfahren nach Anspruch 11, dadurch gekennzeichnet, daß die Polymerlösung durch Filter (50) von 1.000µm auf maximal 100µm abnehmender Maschenweite geleitet wird.

13. Verfahren nach Anspruch 11, dadurch gekennzeichnet, daß die Maschenweite der Filter (50) von 1.000µm auf maximal 50µm, vorzugsweise auf 25µm abnimmt.

14. Verfahren nach einem der Ansprüche 11 bis 13, dadurch gekennzeichnet, daß der Gewichtsanteil des Polymers kleiner 3% der Polymerlösung beträgt.

15. Verfahren nach einem der Ansprüche 11 bis 14, dadurch gekennzeichnet, daß die Polymerlösung mit einem Druck von maximal 20 x 10⁵ Pa (20 bar) durch die Filter gedrückt wird.

16. Verfahren nach einem der Ansprüche 11 bis 15, dadurch gekennzeichnet, daß die Polymerlösung mit einem Druck zwischen 3 x 10⁵ und 8 x 10⁵ Pa (3 und 8 bar) durch die Filter gedrückt wird.

## Claims

1. A device for dissolving water-soluble powdery polymers, which is formed of a pipe having an inlet (100) to introduce polymer solutions comprising gel portions and an outlet (200) to discharge the polymer solutions, as well as of a plurality of pipe sections (10,13,10',13',10'', and 13'') which can be connected with one another and are provided with filters, characterized in that at least one filter (50) has a minimum mesh size of 25 µm and a maximum mesh size of 100 µm and that the filters (50) of pipe sections (10,13,10',13',10'', and 13'') have smaller mesh sizes towards the outlet (200) of the pipe.

2. The device according to claim 1 characterized in that one filter (50) of a pipe section (10,13,10',13',10'', and 13'') is located at one side of the pipe section.

3. The device according to any one of claims 1 or 2 characterized in that each pipe section (10, 13, 10', 13', 10'', and 13'') is provided, at least at one end, with joinable elements (20), in particular with quick-locking elements or screw threads, by means of which they can be connected to one another.

4. The device according to any one of claims 1 to 3 characterized in that one end of each pipe section (10, 13, 10', 13', 10'', and 13'') is provided with a screw sleeve (60) engaging in a thread at the other end of another pipe section.

5. The device according to any one of claims 1 to 4 characterized in that the pipe sections (10, 13, 10', 13', 10'', and 13'') are provided with filters (50) of differing mesh size.

6. The device according to any one of claims 1 to 5 characterized in that the filter (50) of the first pipe section (10) has a mesh size of 1,000 µm or less.

7. The device according to any one of claims 1 to 6 characterized in that the filter (50) of the first pipe section (10) has a mesh size of 1,000 µm or less, and that the filter (50) of the last pipe section (13'') has a maximum mesh size of 100 µm.

8. The device according to any one of claims 1 to 7 characterized in that the filter (50) of the first pipe section (10) has a mesh size of 1,000 µm or less, and that the filter (50) of the last pipe section (13'') has a maximum mesh size of 50 µm, preferably of 25 µm.

9. The device according to any one of claims 1 to 8 characterized in that up to ten pipe sections are provided.

10. The device according to any one of claims 1 to 9 characterized in that seven pipe sections are provided.

11. A process for dissolving water-soluble powdery polymers in a device according to any one of claims 1 to 10, characterized in that an aqueous polymer solution comprising gel portions is passed through successively arranged filters (50) of decreasing mesh size, of which at least one filter has a minimum mesh size of 25 µm and a maximum mesh size of 100 µm.

12. The process according to claim 11 characterized in that the polymer solution is passed through filters (50) decreasing in mesh width from 1,000 µm to a maximum of 100 µm.

13. The process according to claim 11 characterized in that the mesh size of the filters (50) decreases from 1,000 µm to a maximum of 50 µm, preferably to 25 µm.

14. The process according to any one of claims 11 to 13 characterized in that the weight percentage of the polymer amounts to less than 3% of the polymer solution.

15. The process according to any one of claims 11 to 14 characterized in that the polymer solution is forced through the filters at a maximum pressure of 20 x 10⁵ Pa (20 bar).

16. The process according to any one of claims 11 to 15 characterized in that the polymer solution is forced through the filters at a pressure between 3 x 10⁵ Pa and 8 x 10⁵ Pa (3 and 8 bar).

## Revendications

1. Dispositif pour la dissolution de polymères pulvérulents solubles dans l'eau, lequel dispositif est constitué d'un tube comportant une extrémité d'entrée (100) servant à introduire des solutions de polymère contenant du gel, et comportant une extrémité de sortie (200) pour l'extraction des solutions de polymères, ainsi que plusieurs tronçons tubulaires (10, 13, 10', 13', 10'' et 13'') pouvant être reliés les uns aux autres et présentant des filtres, caractérisé en ce qu'au moins un filtre (50) présente une maille d'au moins 25 µm et d'au plus 100 µm, et en ce que les filtres (50) des tronçons de tube (10, 13, 10', 13', 10'' et 13'') présentent des mailles de plus en plus petites en direction de l'extrémité de sortie (200) du tube.

2. Dispositif selon la revendication 1, caractérisé en ce qu'un filtre (50) d'un tronçon de tube (10, 13, 10', 13', 10'' et 13'') est disposé sur un côté du tronçon de tube.

3. Dispositif selon l'une des revendications 1 ou 2, caractérisé en ce que les tronçons de tube (10, 13, 10', 13', 10'' et 13'') présentent chacun à au moins une extrémité des éléments (20) qui peuvent être assemblés, et en particulier des éléments à fermeture rapide ou des filets de vissage, par lesquels ils peuvent être reliés les uns aux autres.

4. Dispositif selon l'une des revendications 1 à 3, caractérisé en ce que les tronçons du tube (10, 13, 10', 13', 10'' et 13'') présentent à chaque extrémité un manchon fileté (60) qui s'engage dans un filet prévu à l'autre extrémité d'un autre tronçon de tube.

5. Dispositif selon l'une des revendications 1 à 4, caractérisé en ce que les tronçons de tube (10, 13, 10', 13', 10'' et 13'') sont dotés de filtres (50) de différentes mailles.

6. Dispositif selon l'une des revendications 1 à 5, caractérisé en ce que le filtre (50) du premier tronçon de tube (10) présente une maille de 1000 µm ou plus petite.

7. Dispositif selon l'une des revendications 1 à 6, caractérisé en ce que le filtre (50) du premier tronçon de tube (10) présente une maille de 1000 µm ou plus petite, et en ce que le filtre (50) du dernier tronçon de tube (13'') présente une maille d'au plus 100 µm.

8. Dispositif selon l'une des revendications 1 à 7, caractérisé en ce que le filtre (50) du premier tronçon de tube (10) présente une maille de 1000 µm ou plus petite, et en ce que le filtre (50) du dernier tronçon de tube (13'') présente une malle d'au plus 50 µm, et de préférence de 25 µm.

9. Dispositif selon l'une des revendications 1 à 8, caractérisé en ce que jusqu'à dix tronçons de tube sont prévus dans celui-ci.

10. Dispositif selon l'une des revendications 1 à 9, caractérisé en ce que sept tronçons de tube sont prévus.

11. Procédé de dissolution de polymères pulvérulents solubles dans l'eau dans un dispositif selon l'une des revendications 1 à 10, caractérisé en ce qu'une solution aqueuse de polymère contenant du gel est passée à travers des filtres (50) disposés les uns derrière les autres et dont la maille est décroissante, parmi lesquels au moins un filtre présente une maille d'au moins 25 µm et d'au plus 100 µm.

12. Procédé selon la revendication 11, caractérisé en ce que la solution de polymère est passée à travers des filtres (50) dont la maille diminue depuis 1000 µm à au plus 100 µm.

13. Procédé selon la revendication 11, caractérisé en ce que la maille des filtres (50) diminue depuis 1000 µm à au plus 50 µm, et de préférence à 25 µm.

14. Procédé selon l'une des revendications 11 à 13, caractérisé en ce que la teneur en poids de polymère dans la solution de polymère est inférieure à 3%.

15. Procédé selon l'une des revendications 11 à 14, caractérisé en ce que la solution de polymère est refoulée à travers les filtres sous une pression d'au plus 20 x 10⁵ Pa (20 bars).

16. Procédé selon l'une des revendications 11 à 15, caractérisé en ce que la solution de polymère est refoulée à travers les filtres sous une pression comprise entre 3 x 10⁵ et 8 x 10⁵ Pa (entre 3 et 8 bars).
